# EUROPÄISCHE PATENTSCHRIFT

(11) **EP 2 207 426 B1**
(45) Veröffentlichungstag und Bekanntmachung des Hinweises auf die Patenterteilung: **24.07.2013**
(21) Anmeldenummer: 08846472.2
(22) Anmeldetag: 30.10.2008
(51) Int. Cl.: A22C 25/16

(54) **VORRICHTUNG ZUM FREISCHNEIDEN DER FLANKENGRÄTEN VON GEKÖPFTEN, GESCHLACHTETEN UND IN IHRER BAUCHHÖHLE GEÖFFNETEN FISCHEN SOWIE FILETIERMASCHINE ZUM FILETIEREN GEKÖPFTER, GESCHLACHTETER UND IN IHRER BAUCHHÖHLE GEÖFFNETER FISCHE MIT EINER SOLCHEN VORRICHTUNG**
DEVICE FOR EXTRACTING THE FLANK BONES OF BEHEADED, SLAUGHTERED FISH HAVING OPEN ABDOMINAL CAVITIES AND FILLETING MACHINE FOR FILLETING BEHEADED, SLAUGHTERED FISH HAVING OPEN ABDOMINAL CAVITIES COMPRISING SUCH A DEVICE
DISPOSITIF POUR ENLEVER PAR DÉCOUPAGE LES ARÊTES LATÉRALES DE POISSONS ÉTÊTÉS, ABATTUS ET OUVERTS AU NIVEAU DE LEUR CAVITÉ ABDOMINALE ET MACHINE À FILETER POUR PRÉLEVER LES FILETS DE POISSONS ÉTÊTÉS, ABATTUS ET OUVERTS AU NIVEAU DE LEUR CAVITÉ ABDOMINALE COMPRENANT UN TEL DISPOSITIF

(30) Priorität: 09.11.2007 DE 102007053905
(43) Veröffentlichungstag der Anmeldung: 21.07.2010
(73) Patentinhaber: Nordischer Maschinenbau Rud. Baader GmbH + Co. KG, 23560 Lübeck (DE)
(72) Erfinder: JÜRS, Michael, 23683 Haffkrug (DE); FINKE, Hans, 23552 Lübeck (DE); BRANDT, Manfred, 23564 Lübeck (DE)
(74) Vertreter: Stork Bamberger
(86) Internationale Anmeldenummer: PCT/EP2008/009353
(87) Internationale Veröffentlichungsnummer: WO 2009/059759

(56) Entgegenhaltungen:
- DE-A1- 1 454 087
- DE-A1- 19 745 891
- DE-C- 943 612
- DE-C1- 19 881 497

## Beschreibung

Die Erfindung betrifft eine Vorrichtung zum Freischneiden der Flankengräten von geköpften, geschlachteten und in ihrer Bauchhöhle geöffneten Fischen, die auf Transportsätteln transportiert werden, umfassend eine obere Grätenführung, eine untere Grätenführung sowie ein Trennaggregat zum Lösen von Fischfilets von den Flankengräten, wobei das Trennaggregat ein Trennmittel mit korrespondierender Gegenlage umfasst und aus einer Warteposition in eine Arbeitsposition und umgekehrt bringbar ist. Des Weiteren betrifft die Erfindung eine Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, Trennmesser zum Trennen der Filets im Schwanzbereich von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Fischsättel zur sicheren Aufnahme der Fische in ihrer Bauchhöhle.

Solche Vorrichtungen und Filetiermaschinen kommen in der Fisch verarbeitenden Industrie zum Einsatz, um Fische, insbesondere der Spezies Lachs, automatisch zu filetieren. Ein wesentlicher Arbeitsschritt bei der automatisierten Filetierung der Fische ist das Lösen der Filets von den Flankengräten, also den Rippenbögen, die sich zu beiden Seiten der Mittelgräte erstrecken. Dabei werden die Fische mittels der Transportsättel zu den einzelnen Bearbeitungswerkzeugen, u.a. auch der Vorrichtung zum Freischneiden der Flankengräten transportiert. Die oberen und unteren Grätenführungen dienen dazu, den Fisch in der optimalen Bearbeitungsposition auf dem Transportsattel zu halten bzw. zu führen. Das Trennaggregat ist üblicherweise zu beiden Seiten des zu bearbeitenden Fisches angeordnet, so dass die Filets parallel oder zeitversetzt von den Flankengräten gelöst werden können.

Das Lösen der Filets von den Flankengräten erfolgt im Stand der Technik, der z.B. durch die WO 02/03807 A1 gebildet wird, mittels eines Schabewerkzeuges. Mit anderen Worten ist die Vorrichtung zum Freischneiden der Flankengräten durch ein Schabewerkzeug gebildet, das aus Schälmessern und Schälmessergegenlagen gebildet ist: Sowohl die Schälmesser als auch die Schälmessergegenlagen sind feststehend ausgebildet und neben der Höhenverstellbarkeit auch seitlich ausschwenkbar. Diese bekannte Vorrichtung und damit auch eine Filetiermaschine mit einer solchen Vorrichtung weist jedoch den Nachteil auf, dass die Schnittfläche durch das schabende Lösen rau ist. Des Weiteren sind die Möglichkeiten der Schnittführungen durch die feststehenden Schälmesser bzw. Schälmessergegenlagen begrenzt, so dass die ersten Flankengräten bisweilen im Filet verbleiben. Dadurch entsteht ein erhöhter Nachbearbeitungsbedarf, der zu Mehrkosten führt.

Vorrichtungen zum Freischneiden der Flankengräten von Fischen gemäß dem Oberbegriff vom unabhängigen Anspruch 1 sind z.B. aus DE 943612 bekannt.

Es ist daher Aufgabe der vorliegenden Erfindung, eine Vorrichtung bzw. ein Verfahren zum Freischneiden der Flankengräten vorzuschlagen, die bzw. das eine verbesserte Schnittfläche und individuelle Schnittführungen gewährleistet. Des Weiteren ist es Aufgabe der Erfindung, eine entsprechende Filetiermaschine vorzuschlagen.

Diese Aufgabe wird durch eine Vorrichtung mit den eingangs genannten Merkmalen dadurch gelöst, dass das Trennmittel ein rotierendes Kreismesser und die Gegenlage ein feststehendes Element ist, wobei sowohl das Kreismesser als auch das Element um zwei Achsen schwenkbar sind und das Element relativ zum Kreismesser und unabhängig von diesem bewegbar ist. Der Begriff "feststehend" im Zusammenhang mit der Gegenlage bedeutet, dass die Gegenlage als Einheit zwar bewegbar, z.B. schwenkbar ist, im Gegensatz zur Rotation des Kreismesser jedoch keine aktive Schnitt- oder Trennbewegung, wie z.B. Rotation, Oszillation oder dergleichen ausführt. Durch das aktive Schneiden der Filets von den Flankengräten durch das rotierende Kreismesser wird eine glatte Schnittfläche erzeugt, wobei die Positionierung der Gegenlage relativ zum Kreismesser diesen Effekt unterstützt. Mit anderen Worten ermöglich die erfindungsgemäße Ausbildung, dass die Gegenlage während des Freischneidens der Flankengräten in eine optimierte Position zum Kreismesser gebracht werden kann, dass ein möglichst glatter und fehlerfreier Schnitt erfolgt.

Eine zweckmäßige Weiterbildung der Erfindung zeichnet sich dadurch aus, dass das feststehende Element sichelförmig ausgebildet ist. Die sichelförmige oder halbmondförmige Ausbildung dient dazu, in einem längeren Schnittbereich des Kreismessers, also entlang eines Kreissegmentes des Kreismessers, eine Schnittbegrenzung vorzusehen. Durch die linienförmige Bereitstellung bzw. Ausbildung der Gegenlage kann insbesondere die Schnittstärke über die Schnittlänge verändert werden.

Vorzugsweise weisen jedes Kreismesser und die entsprechende Gegenlage eine gemeinsame Schwenkachse und jeweils eine weitere separate Schwenkachse auf. Anders ausgedrückt sind mindestens drei Schwenkachsen vorgesehen. Eine Schwenkachse ermöglicht es der Vorrichtung bzw. der Einheit aus Kreismesser und Gegenlage, insgesamt auf und ab geschwenkt zu werden. Eine zweite Schwenkachse ermöglicht es dem Kreismesser, in Richtung der Grätenführungen und von diesen weg bewegt zu werden. Die dritte Schwenkachse ermöglicht es der Gegenlage, in Richtung der Grätenführungen und von diesen weg zu schwenken. Die Bewegungen der zweiten und dritten Achse dienen einerseits dazu, insbesondere die Schnittstärke einzustellen. Anderseits ermöglicht die Schwenkbewegung um die zweite und dritte Schwenkachse eine Bewegung aus der Warteposition in die Bearbeitungsposition und zurück.

Vorteilhafterweise weist jede Gegenlage eine zusätzliche Schwenkachse auf. Damit ist jede Gegenlage um insgesamt drei Schwenkachsen bewegbar. Dadurch wird erreicht, dass insbesondere der Schnittwinkel zum Kreismesser veränderbar ist. Mit anderen Worten kann durch die zusätzliche Schwenkbewegung eine X-Stellung zum Kreismesser erzielt werden.

Eine bevorzugte Weiterbildung der Erfindung ist dadurch gekennzeichnet, dass im Bereich der unteren Grätenführung Ausnehmungen zur Aufnahme der Gegenlagen sowie der Kreismesser ausgebildet sind. Dadurch können sich die Gegenlagen und die Kreismesser in der Warteposition außerhalb des Transportbereichs der Fische aufhalten, was insbesondere beim Überleiten des in Fischlaufrichtung vorauseilenden Schwanzbereiches in den Bereich der Kreismesser verhindert, dass die Kreismesser in Fischlaufrichtung vor den beginnenden Flankengräten in den Fisch dringen bzw. den Fisch in der Fleischstruktur durch Überleiten über abdeckende Abdeckungen aufbrechen. Anders ausgedrückt kann auf zusätzliche Abweiser, die zwischen den Fischen und den Kreismessern angeordnet sein würden, verzichtet werden.

Die Aufgabe wird auch durch eine eingangs erwähnte Filetiermaschine gelöst, die sich dadurch auszeichnet, dass die Vorrichtung zum Freischneiden der Flankengräten nach einem der Ansprüche 1 bis 12 ausgebildet ist. Die sich daraus ergebenden Vorteile wurden bereits im Zusammenhang mit der Vorrichtung zum Freischneiden erwähnt, so dass zur Vermeidung von Wiederholungen an dieser Stelle auf die entsprechenden Passagen verwiesen wird.

Weitere zweckmäßige und/oder vorteilhafte Merkmale und Weiterbildungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine perspektivische Ansicht einer erfindungsgemäßen Vorrichtung in einem Stadium, in dem ein Fisch auf die Kreismesser trifft,
- Fig. 2: die Vorrichtung gemäß Figur 1 in einer Vorderansicht,
- Fig. 3: eine perspektivische Ansicht der erfindungsgemäßen Vorrichtung in einem Stadium, in dem das Lösen der Filets von den Flankengräten beginnt,
- Fig. 4: die Vorrichtung gemäß Figur 3 in einer Vorderansicht,
- Fig. 5: eine perspektivische Ansicht der erfindungsgemäßen Vorrichtung in einem Stadium, in dem das Lösen der Filets von den Flankengräten weiter fortgeschritten ist,
- Fig. 6: die Vorrichtung gemäß Figur 5 in einer Vorderansicht, und
- Fig. 7: eine Seitenansicht eines Transportsattels mit angedeutetem Grätengerüst.

Die gezeigte Vorrichtung dient zum Freischneiden der Flankengräten (im Folgenden auch als Rippen bezeichnet) von geköpften, geschlachteten und in ihrer Bauchhöhle geöffneter Lachse, die in Fischlaufrichtung Schwanz voraus transportiert werden. Die Vorrichtung kann jedoch selbstverständlich auch zum Lösen der Filets von den Rippen anderer Fischspezies eingesetzt werden. Auch ist ein Einsatz bei Fischen, die in Fischlaufrichtung Kopf voraus transportiert werden, möglich.

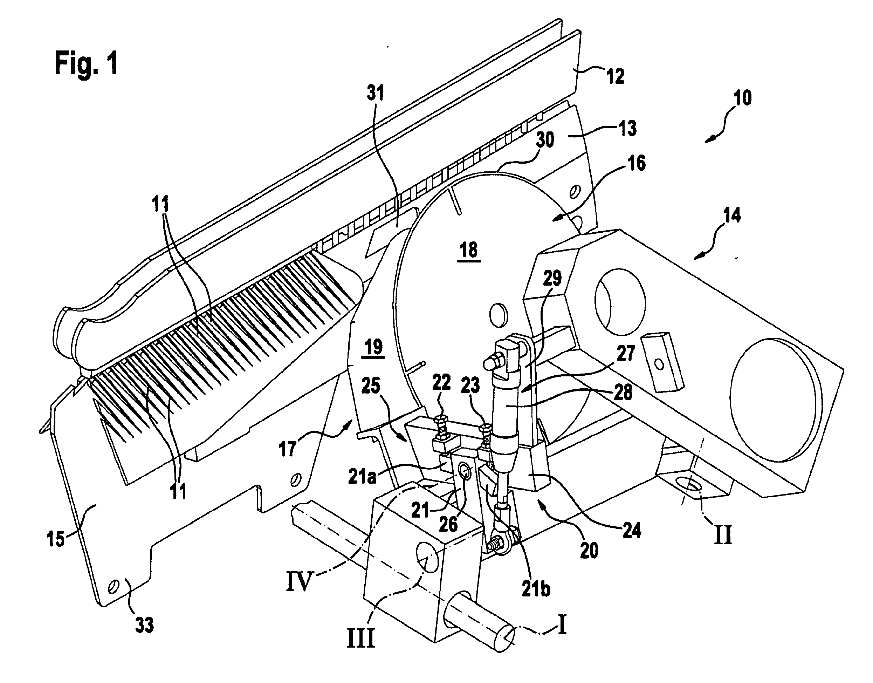

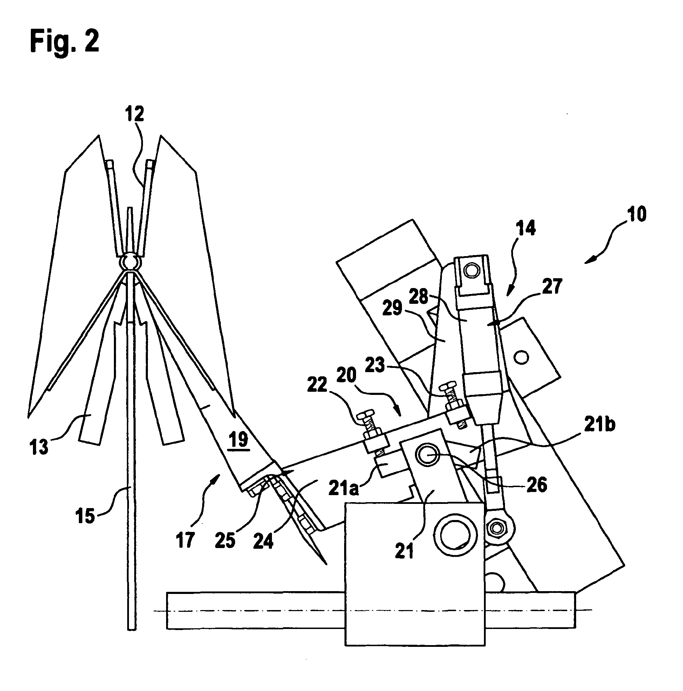

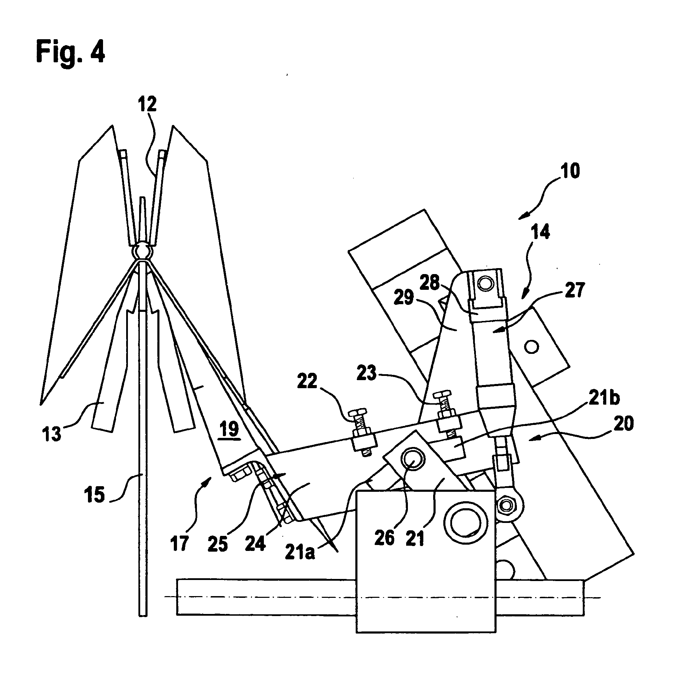

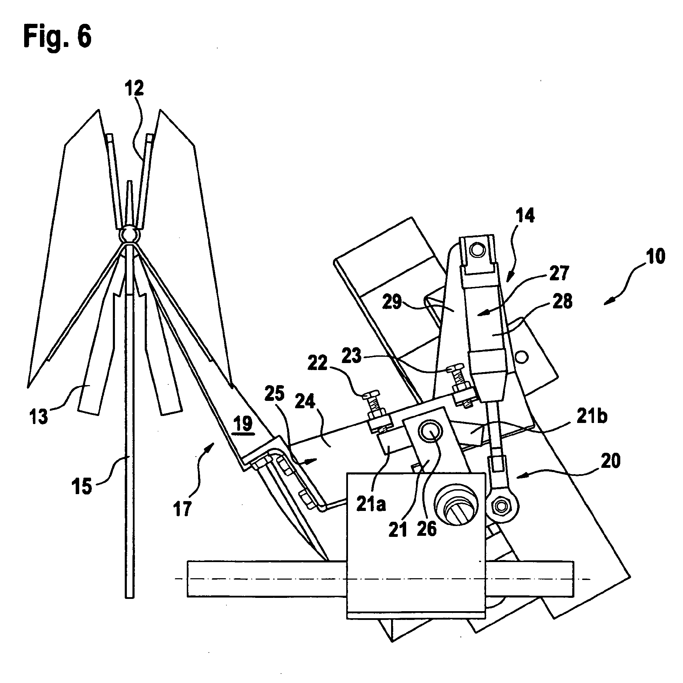

Bei der in den Figuren 1 bis 6 dargestellten Vorrichtung 10 zum Freischneiden der Flankengräten 11 wird der besseren Übersicht halber nur eine Vorrichtung 10 für die Bearbeitung einer Fischseite dargestellt und beschrieben. In der Praxis befinden sich jedoch zu beiden Seiten eines zu bearbeitenden Fisches die im folgenden beschriebenen Vorrichtungen 10, so dass die beiden Filets eines Fisches auf beiden Seiten vorzugsweise zeitgleich, optional jedoch auch zeitversetzt, von den Flankengräten 11 gelöst werden können. Alternativ können zwei auf gegenüber liegenden Seiten eines Fisches angeordnete Vorrichtungen 10 auch eine gemeinsame Vorrichtung 10 bilden, wobei die Bearbeitung auf beiden Seiten synchronisiert oder unabhängig voneinander erfolgen kann.

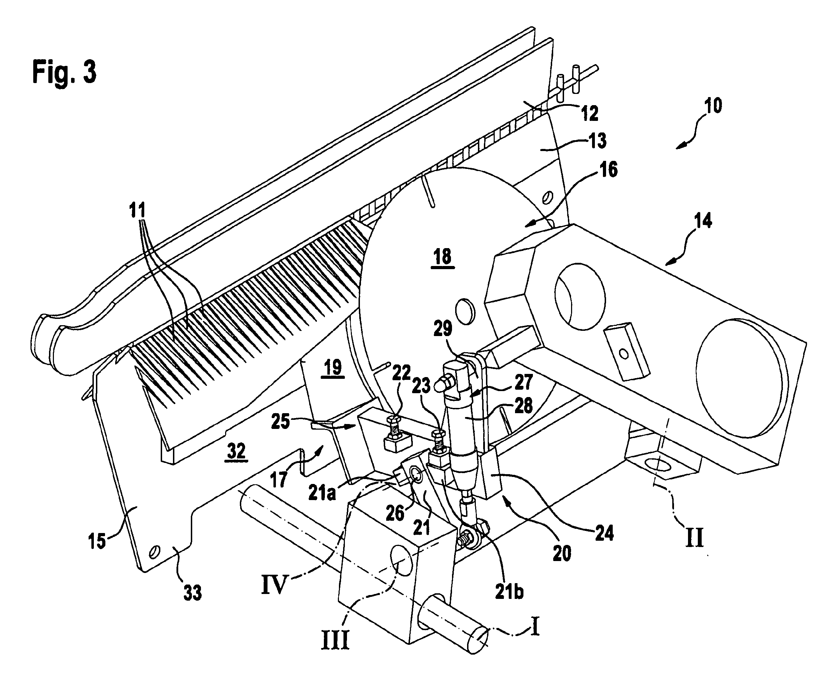

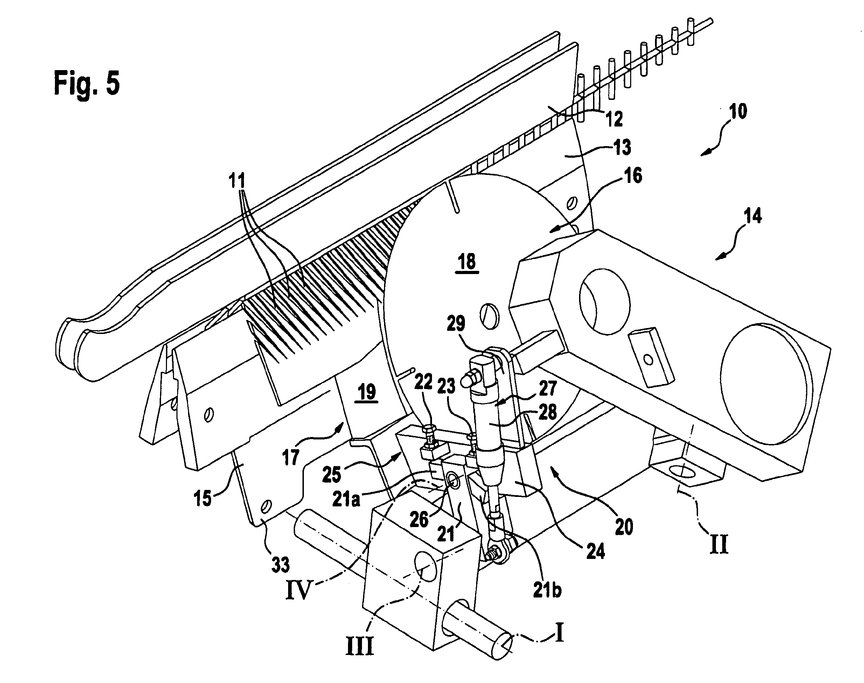

Die Vorrichtung 10 zum Freischneiden der Flankengräten 11 umfasst eine obere Grätenführung 12, eine untere Grätenführung 13 sowie ein Trennaggregat 14. Mittels der Grätenführungen 12, 13 wird der zu bearbeitende Fisch, der üblicherweise auf einem Transportsattel 15 in den Bereich den Trennaggregats 14 transportiert wird, in einer definierten Position gehalten, derart, dass der Fisch in Bezug auf das Trennaggregat 14 in einer definierten Lage liegt. Der Transportsattel 15 wird weiter unten detaillierter beschrieben. Das Trennaggregat 14 weist ein Trennmittel 16 auf, dem eine korrespondierende Gegenlage 17 zugeordnet ist. Das Trennaggregat 14 bzw. das Trennmittel 16 mit der Gegenlage 17 ist aus einer Warteposition (siehe z.B. Figur 1), in der ein Eingriff des Trennmittels 16 in den Fisch verhindert ist, in eine Bearbeitungsposition (siehe Figuren 3 und 5), in der das Trennmittel 16 die Flankengräten 11 freischneidet, und zurück bewegbar.

Das Trennmittel 16 der Vorrichtung 10 ist als rotierendes Kreismesser 18 ausgebildet und mittels eines nicht explizit dargestellten Antriebs mit variabler Drehzahl rotierend antreibbar. Die Gegenlage 17 ist ein feststehendes Element 19. Der Begriff "feststehend" wurde weiter oben bereits definiert bzw. erläutert, weswegen an dieser Stelle auf eine Wiederholung verzichtet wird. Das feststehende Element 19 ist vorzugsweise sicherförmig oder auch halbmondförmig ausgebildet und in Fischlaufrichtung (siehe Pfeil F) vor dem Kreismesser 18 angeordnet. Sowohl das Kreismesser 18 als auch das Element 19 sind um zwei Achsen schwenkbar, um einerseits aus der Warteposition in die Bearbeitungsposition und zurück bewegbar zu sein und andererseits die notwendigen Schnittbewegungen ausführen zu können. Zur Bearbeitung beider Fischseiten kann das Trennmittel 16 zwei Kreismesser 19 mit entsprechender Gegenlage 17 umfassen, wobei die beiden Kreismesser 19 und die zugehörige Gegenlage 17 auf einander gegenüber liegenden Seiten des zu bearbeitenden Fisches angeordnet sind.

Wie bereits erwähnt, ist jedes Kreismesser 18 und jedes Element 19 um mindestens zwei Schwenkachsen schwenkbar. Ein Kreismesser 18 und ein Element 19 einer Bearbeitungsseite weisen eine gemeinsame Schwenkachse I auf. Durch die Bewegung um die gemeinsame Schwenkachse I sind das Kreismesser 18 und das Element 19 in Bezug auf die Transportebene der Fische auf und ab bewegbar. Des Weiteren ist das Kreismesser 18 um eine Schwenkachse II bewegbar, mittels der das Kreismesser 18 auf die Grätenführungen 12, 13 zu und von diesen weg, also quer zur Fischlaufrichtung, bewegbar ist. Das Element 19 ist um eine von der Schwenkachse II unabhängige Schwenkachse III bewegbar. Durch die Bewegung um die Schwenkachse III ist das Element 19 auf die Grätenführungen 12, 13 zu und von diesen weg, also quer zur Fischlaufrichtung, bewegbar. Die Schwenkachsen II und III ermöglichen auch eine Bewegung von Kreismesser 18 und Element 19 relativ zueinander. Optional weist das Element 19 eine weitere, zusätzliche Schwenkachse IV auf. Mittels einer Bewegung um die Schwenkachse IV ist das Element 19 ebenfalls auf die Grätenführungen 12, 13 zu und von diesen weg, also quer zur Fischlaufrichtung, bewegbar. Die Schwenkbewegungen des Elementes 19 um die Schwenkachsen III und IV sind ebenso überlagerbar wie die Bewegungen um die anderen Schwenkachsen.

Die Gegenlage 17 bzw. das Element 19 steht mit einem Stellelement 20 in Wirkverbindung. Anders ausgedrückt ist dem Element 19 ein Stellelement 20 zugeordnet, mittels dem das Element 19 insbesondere in Bezug auf das Kreismesser 18 zur Einstellung eines Schnittwinkels und/oder der Schnittstärke verstellbar ist. Das Stellelement 20 umfasst ein Anschlagelement 21, das zwei Anschläge 21 a und 21 b aufweist und mit Stellschrauben 22, 23 in Wirkverbindung steht. Anstelle der Stellschrauben 22, 23 können auch andere Stellglieder eingesetzt werden. Des Weiteren umfasst das Stellelement 20 ein Tragelement 24. Das Tragelement 24 und das Anschlagelement 21 weisen eine gemeinsame Schwenkachse, nämlich die Schwenkachse IV auf. Mit anderen Worten sind sowohl das Anschlagelement 21 als auch das Tragelement 24 um die Schwenkachse IV schwenkbar.

An dem Tragelement 24, das an einem freien Ende 25 mit dem Element 19 verbunden ist, sind die Stellschrauben 22, 23 oder dergleichen angeordnet. Das Tragelement 24 und das Anschlagelement 21 sitzen auf einer gemeinsamen Welle 26, die die Schwenkachse IV bildet. Dem Tragelement 24 bzw. dem Anschlagelement 21 ist ein Betätigungselement 27 zugeordnet. Das Betätigungselement 27 ist beispielsweise ein pneumatischer Zylinder 28, der einerseits über einen Stützbügel 29 am Tragelement 24 und andererseits am Anschlagelement 21 befestigt ist. Die Anordnung und Ausbildung des Betätigungselementes 27 kann aber auch in anderer Weise realisiert sein. Mittels des Betätigungselementes 27 kann die Schwenkbewegung um die Schwenkachse IV realisiert werden.

Im Bereich der unteren Grätenführung 13 sind Ausnehmungen 30, 31 zur Aufnahme des Kreismessers 18 und des Elementes 19 ausgebildet. Die Ausnehmung 30 ist der Kontur des Kreismessers 18 angepasst und weist eine Tiefe auf, die es dem Kreismesser 18 erlaubt, vollständig innerhalb der Grätenführung 13 zu liegen. Das vollständig bezieht sich darauf, dass das Kreismesser 18 in der Warteposition derart in der Grätenführung 13 liegt, dass es quer zur Fischlaufrichtung nicht über die Grätenführung 12 hinausragt. Die Ausnehmung 31 ist an die Sichelform des Elementes 19 angepasst und ebenfalls in der Tiefe derart ausgebildet, dass das Element 19 in der Warteposition entsprechend vollständig innerhalb der Grätenführung 13 liegt. Die Ausbildung der Ausnehmungen 30, 31 kann jedoch selbstverständlich variieren.

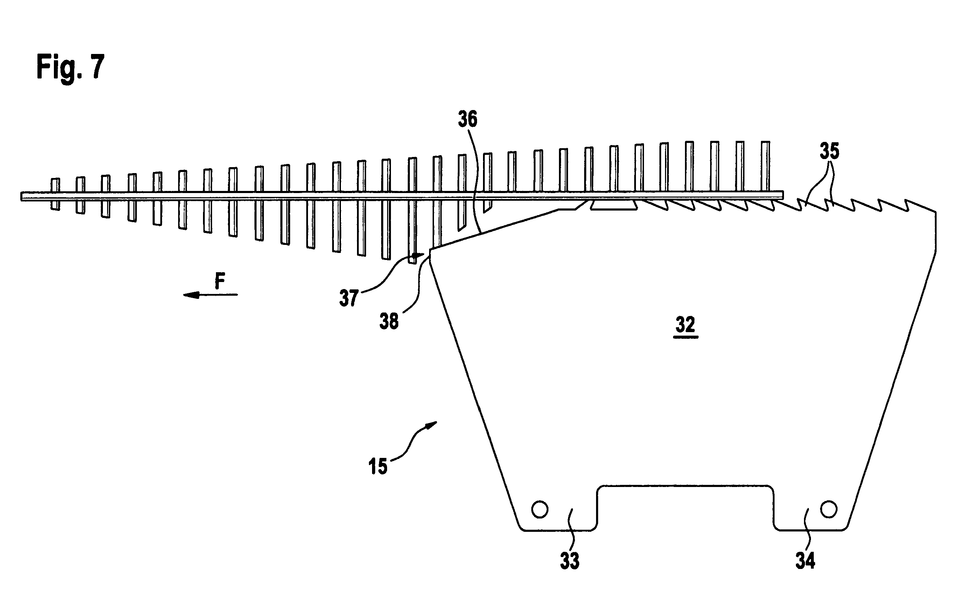

In der Figur 7 ist der Transportsattel 15 vergrößert dargestellt. Der Transportsattel 15 ist grundsätzlich in herkömmlicher Weise aufgebaut, nämlich mit einem Sattelkörper 32, der mittels Stützelementen 33, 34 an einer endlos umlaufenden (nicht dargestellten) Transportkette befestigt ist. Auf der dem Fisch zugewandten Oberseite weist der Sattelkörper 32 Fixierungselemente 35 auf, die bevorzugt als Sägezähne ausgebildet sind. Der Fisch wird Kopfbereich voraus auf den Transportsattel 15 geschoben, wobei der Transportsattel 15 mindestens teilweise in der Bauchhöhle liegt. Im vorderen, dem Fisch zugewandten Bereich ist der Transportsattel 15 bzw. der Sattelkörper 32 unter Bildung einer Schräge 36 abfallend ausgebildet, wodurch das Einfädeln/Auffädeln des Fisches auf den Transportsattel 15 erleichtert wird. An die Schräge 36 schließt sich ein im Wesentlichen vertikal verlaufender Bereich 37 an, der eine Anschlagfläche 38 bildet. Von der Anschlagfläche 38 aus verläuft der Sattelkörper 32 in Richtung der Stützelemente 33. Durch die Anschlagfläche 38, die beim Auffädeln des in der Bauchhöhle geöffneten Fisches gegen das im Schwanzbereich des Fisches befindliche Ende der Bauchhöhle stößt, wird der Fisch optimal positioniert.

Im Folgenden wird das Verfahrensprinzip insbesondere anhand der Figurenfolge 1, 3, 5 näher erläutert:

Der zu bearbeitende Fisch wird vor dem Aufsetzen auf den Transportsattel 15 geköpft und geschlachtet, so dass der Fisch in der Bauchhöhle geöffnet ist. Dann wird der "kopflose" Fisch Kopfbereich voraus entgegen der Fischlaufrichtung F (siehe Figur 7) auf den Transportsattel 15 geschoben, bis die Anschlagfläche 38 des Transportsattels 15 gegen das Ende der Bauchhöhle trifft. Der so positionierte Fisch wird vorzugsweise in Fischlaufrichtung Schwanz voraus durch die Filetiermaschine transportiert. Der zu bearbeitende Fisch wird auf dem Transportsattel 15 u.a. in den Bereich der Vorrichtung 10 transportiert. Zum schonenden Überleiten des in Fischlaufrichtung voraus laufenden Schwanzbereiches befinden sich das Kreismesser 18 und das Element 19 in der Warteposition in den Ausnehmungen 30, 31 (siehe z.B. Figur 1), so dass der Schwanzbereich das Trennaggregat 14 ohne Beeinträchtigung/Beschädigung passieren kann. Sobald sich der Bereich der Flankengräten 11 in Fischlaufrichtung dicht vor dem Kreismesser 18 befindet, wird das Kreismesser 18 um die beiden Schwenkachsen I und II aus der Ausnehmung 30 und in die Bearbeitungsposition verschwenkt. Parallel wird das Element 19 entsprechend um die beiden Schwenkachsen I und III verschwenkt (siehe Figur 3). Die Größe der Zustell- bzw. Schwenkbewegungen kann als Funktion der Fischgröße individuell gewählt werden.

Das Element 19 liegt mit seiner oberen Spitze in der Ausnehmung 31 an der unteren Grätenführung 13 an. Während des Freischneidens der Flankengräten 11 wird das Element 19 derart zum Kreismesser 18 gestellt, dass ein glatter Schnitt erfolgt. Die Stellung des Elementes 19 zum Kreismesser 18 kann insbesondere dadurch verändert werden, indem das Element 19 über das Betätigungselement 27 aktiviert wird. Anders ausgedrückt kann durch Betätigung des Betätigungselementes 27 der Winkel des Elementes 19 zum Kreismesser 18 innerhalb eines festen Bereichs zwischen den beiden Anschlägen 21a und 21b des Anschlagelementes 21 eingestellt bzw. verstellt werden. Daraus ergeben sich unterschiedliche Schnittwinkel und Schnittstärken. Eine maximale bzw. minimale Schnittstärke wird erreicht, wenn die Anschläge 21 a, 21 b an die Stellschrauben 22, 23 stoßen. Zwischen den Anschlägen 21 a, 21 b arbeitet das Element 19 gegen den wählbaren Luftdruck des Zylinders 28 und stellt die Schnittstärke damit automatisch ein. Wie bereits erwähnt, rotieren die Kreismesser 18 zum Freischneiden der Filets. Es besteht aber die Möglichkeit, die Schnittgeschwindigkeit der Kreismesser 18 vorzugsweise nach dem Eindringen in den Fisch zu variieren und insbesondere auch zu reduzieren. Selbst ein temporärer Stillstand der Kreismesser 18 während des Freischneidens der Filets ist möglich. In einem solche Fall würden die Kreismesser 18 als eine Art Schabemesser wirken.

Durch die Verstellung der Anschlagschrauben bzw. Stellschrauben 22, 23 kann des Weiteren bestimmt werden, ob die Membran (weiße Bauchhaut) am Filet verbleiben soll, oder ob die Membran vom Filet getrennt werden soll. Beim Lachs befindet sich die Membran beispielsweise am unteren Rand der Bauchhöhle. Bei der in den Figuren 3 und 5 eingestellten Einstellung der Stellschrauben 22, 23 wird die Membran vom Filet abgetrennt und verbleibt an den Flankengräten 11. Die Verstellung der Schnittwinkel und der Schnittstärke kann während des Freischneidens variiert werden, so dass z.B. der Spalt zwischen Kreismesser 18 und Element 19 am Anfang der Bauchhöhle größer ist als in der Mitte oder am Ende der Bauchhöhle. Dadurch können die Flankengräten 11 leichter zwischen das Element 19 und das Kreismesser 18 gelangen.

## Patentansprüche

1. Vorrichtung (10) zum Freischneiden der Flankengräten (11) von geköpften, geschlachteten und in ihrer Bauchhöhle geöffneten Fischen, die auf Transportsätteln (15) transportiert werden, umfassend eine obere Grätenführung (12), eine untere Grätenführung (13) sowie ein Trennaggregat (14) zum Lösen von Fischfilets von den Flankengräten (11), wobei das Trennaggregat (14) ein Trennmittel (16) mit korrespondierender Gegenlage (17) umfasst und aus einer Warteposition in eine Arbeitsposition und umgekehrt bringbar ist, wobei das Trennmittel (16) ein rotierendes Kreismesser (18) und die Gegenlage (17) ein feststehendes Element (19) ist, und das Element (19) relativ zum Kreismesser (18) und unabhängig von diesem bewegbar ist, **dadurch gekennzeichnet, dass** sowohl das Kreismesser (18) als auch das Element (19) um Zwei Achsen schwenkbar sind.

2. Vorrichtung nach Anspruch 1, **dadurch gekennzeichnet, dass** das Trennmittel (16) zwei Kreismesser (18) mit entsprechender Gegenlage (19) umfasst, wobei die beiden Kreismesser (18) und die zugehörige Gegenlage (19) auf einander gegenüber liegenden Seiten des zu bearbeitenden Fisches angeordnet sind.

3. Vorrichtung nach Anspruch 1 oder 2, **dadurch gekennzeichnet, dass** das feststehende Element (19) sichelförmig ausgebildet ist.

4. Vorrichtung nach einem der Ansprüche 1 bis 3, **dadurch gekennzeichnet, dass** jedes Kreismesser (18) und die entsprechende Gegenlage (19) eine gemeinsame Schwenkachse I und jeweils eine weitere separate Schwenkachse II bzw. III aufweisen.

5. Vorrichtung nach Anspruch 4, **dadurch gekennzeichnet, dass** jede Gegenlage (17) eine zusätzliche Schwenkachse IV aufweist.

6. Vorrichtung nach einem der Ansprüche 1 bis 5, **dadurch gekennzeichnet, dass** jede Gegenlage (17) mit einem Stellelement (20) in Wirkverbindung steht.

7. Vorrichtung nach Anspruch 6, **dadurch gekennzeichnet, dass** das Stellelement (20) ein Anschlagelement (21) umfasst, das mit Stellschrauben (22, 23) in Wirkverbindung steht.

8. Vorrichtung nach Anspruch 7, **dadurch gekennzeichnet, dass** das Stellelement (20) zusätzlich Tragelement (24) umfasst, wobei sowohl die Gegenlage (17) als auch die Stellschrauben (22, 23) an dem Tragelement (24) angeordnet sind.

9. Vorrichtung nach Anspruch 7 oder 8, **dadurch gekennzeichnet, dass** das Anschlagelement (21) über ein Betätigungselement (27) betätigbar ist.

10. Vorrichtung nach Anspruch 9, **dadurch gekennzeichnet, dass** das Betätigungselement (27) ein pneumatischer Zylinder (28) ist, wobei der Zylinder (28) einerseits am Tragelement (24) und andererseits am Anschlagelement (21) befestigt ist.

11. Vorrichtung nach einem der Ansprüche 1 bis 10, **dadurch gekennzeichnet, dass** im Bereich der unteren Grätenführung (13) Ausnehmungen (30, 31) zur Aufnahme der Elemente (19)sowie der Kreismesser (18) ausgebildet sind.

12. Vorrichtung nach Anspruch 11, **dadurch gekennzeichnet, dass** die Ausnehmungen (30, 31) derart ausgebildet sind, dass das Kreismesser (18) und das Element (19) in der Warteposition vollständig innerhalb der unteren Grätenführung (13) liegen.

13. Filetiermaschine zum Filetieren geköpfter, geschlachteter und in ihrer Bauchhöhle geöffneter Fische, umfassend Rückenmesser zum Freilegen der Rückenspeichen bis an die Wirbelsäule heran, Bauchmesser zum Freilegen der Bauchspeichen im Schwanzbereich bis an die Wirbelsäule heran, eine Vorrichtung zum Freischneiden der Flankengräten, Trennmesser zum Trennen der Filets im Schwanzbereich von der Wirbelsäule unter Durchschneiden des von Bauch- und Rückenmessern um die Wirbelsäule belassenen Steges, einen endlosen Förderer zum Transport der Fische Schwanz voraus sowie eine Anzahl auf dem Förderer angeordneter Fischsättel zur sicheren Aufnahme der Fische in ihrer Bauchhöhle, **dadurch gekennzeichnet , dass** die Vorrichtung zum Freischneiden der Flankengräten nach einem der Ansprüche 1 bis 12 ausgebildet ist.

## Claims

1. Apparatus (10) for cutting free the flank bones (11) of beheaded, slaughtered fish having open abdominal cavities which are transported on transport saddles (15), comprising an upper bone guide (12), a lower bone guide (13) and a separating unit (14) for detaching fish fillets from the flank bones (11), wherein the separating unit (14) includes a separating means (16) with corresponding counter support (17) and can be moved out of a standby position into a working position and vice versa, wherein the separating means (16) is a rotating circular knife (18) and the counter support (17) is a fixed element (19), and the element (19) is movable relative to the circular knife (18) and independently thereof, **characterised in that** both the circular knife (18) and the element (19) are pivotable about two axes.

2. Apparatus according to claim 1, **characterised in that** the separating means (16) comprises two circular knives (18) with corresponding counter support (19), wherein the two circular knives (18) and the associated counter support (19) are arranged on opposite sides of the fish to be processed.

3. Apparatus according to claim 1 or 2, **characterised in that** the fixed element (19) is sickle-shaped.

4. Apparatus according to any one of claims 1 to 3, **characterised in that** each circular knife (18) and the corresponding counter support (19) have a common pivot axis I and one further separate pivot axis II or III, each.

5. Apparatus according to claim 4, **characterised in that** each counter support (17) has an additional pivot axis IV.

6. Apparatus according to any one of claims 1 to 5, **characterised in that** each counter support (17) is operatively connected to an adjusting element (20).

7. Apparatus according to claim 6, **characterised in that** the adjusting element (20) comprises a stop element (21) which is operatively connected to adjusting screws (22, 23).

8. Apparatus according to claim 7, **characterised in that** the adjusting element (20) in addition comprises a supporting element (24), wherein both the counter support (17) and the adjusting screws (22, 23) are arranged on the supporting element (24).

9. Apparatus according to claim 7 or 8, **characterised in that** the stop element (21) can be actuated via an actuating element (27).

10. Apparatus according to claim 9, **characterised in that** the actuating element (27) is a pneumatic cylinder (28), wherein the cylinder (28) is attached on the one hand to the supporting element (24) and on the other hand to the stop element (21).

11. Apparatus according to any one of claims 1 to 10, **characterised in that** in the region of the lower bone guide (13) are formed recesses (30, 31) for receiving the elements (19) as well as the circular knives (18).

12. Apparatus according to claim 11, **characterised in that** the recesses (30, 31) are designed in such a way that the circular knife (18) and the element (19) in the standby position lie completely within the lower bone guide (13).

13. Filleting machine for filleting beheaded, slaughtered fish having open abdominal cavities, comprising dorsal knives for exposing the back spokes as far as the backbone, abdominal knives for exposing the belly spokes in the tail region as far as the backbone, an apparatus for cutting the flank bones free, separating knives for separating the fillets in the tail region from the backbone while cutting through the web left round the backbone by abdominal and dorsal knives, an endless conveyor for transport of the fish tail first, and a number of fish saddles arranged on the conveyor for reliably receiving the fish in their abdominal cavities, **characterised in that** the apparatus for cutting the flank bones free is designed according to any one of claims 1 to 12.

## Revendications

1. Dispositif (10) servant à enlever par découpage les arêtes latérales (11) de poissons étêtés, abattus et ouverts au niveau de leur cavité abdominale, les poissons étant transportés sur des supports de transport (15), comportant un élément de guidage d'arêtes supérieur (12), un élément de guidage d'arêtes inférieur (13) et une unité (14) de découpe pour enlever les arêtes latérales (11) sur les filets de poissons, l'unité (14) de découpe comprenant un moyen (16) de découpe avec une butée (17) correspondante et pouvant être déplacée d'une position d'attente à une position de travail, et inversement, le moyen (16) de découpe étant un couteau circulaire (18) rotatif et la butée (17) un élément (19) fixe, l'élément (19) pouvant être déplacé par rapport au couteau circulaire (13) et indépendamment de celui-ci, **caractérisé en ce que** le couteau circulaire (13) et l'élément (19) peuvent tous deux pivoter autour de deux axes.

2. Dispositif selon la revendication 1, **caractérisé en ce que** le moyen (16) de découpe comprend deux couteaux circulaires (18) avec une butée (19) correspondante, les deux couteaux circulaires (18) et la butée (19) correspondante étant disposés sur des côtés opposés du poisson à traiter.

3. Dispositif selon la revendication 1 ou la revendication 2, **caractérisé en ce que** l'élément fixe (19) a la forme d'une faucille.

4. Dispositif selon l'une des revendications 1 à 3, **caractérisé en ce que** chaque couteau circulaire (18) et la butée correspondante (19) présentent un axe de picotement commun I et respectivement un autre axe de picotement séparé II ou III.

5. Dispositif selon la revendication 4, **caractérisé en ce que** chaque butée (17) présente un axe de pivotement supplémentaire IV.

6. Dispositif selon l'une des revendications 1 à 5, **caractérisé en ce que** chaque butée (17) coopère avec un élément (20) de réglage.

7. Dispositif selon la revendication 6, **caractérisé en ce que** l'élément (20) de réglage comprend un élément (21) de butée qui coopère avec des vis (22, 23) de réglage.

8. Dispositif selon la revendication 7, **caractérisé en ce que** l'élément (20) de réglage comprend en plus un élément (24) de support, la butée (17) ainsi que les vis (22, 23) de réglage étant disposées sur l'élément (24) de support.

9. Dispositif selon la revendication 7 ou la revendication 8, **caractérisé en ce que** l'élément (21) de butée peut être actionné via un élément (27) d'actionnement.

10. Dispositif selon la revendication 9, **caractérisé en ce que** l'élément (27) d'actionnement est un cylindre pneumatique (28), le cylindre (28) étant fixé d'un côté à l'élément (24) de support et, de l'autre, à l'élément (21) de butée.

11. Dispositif selon l'une des revendications 1 à 10, **caractérisé en ce que** des évidements (30, 31) sont réalisés dans la zone du guidage d'arêtes inférieur (13) afin de recevoir les éléments (19) ainsi que les couteaux circulaires (18).

12. Dispositif selon la revendication 11, **caractérisé en ce que** les évidements (30, 31) sont conçus de telle sorte que le couteau circulaire (18) et l'élément (19) se trouvent totalement à l'intérieur du guidage d'arêtes inférieur (13) en position d'attente.

13. Machine de réalisation de filets pour lever les filets de poissons étêtés, abattus et ouverts au niveau de leur cavité abdominale, comprenant des couteaux à dos pour dégager les arêtes dorsales jusqu'à la colonne vertébrale, des couteaux à ventre pour dégager les arêtes ventrales dans la zone de la queue jusqu'à la colonne vertébrale, un dispositif servant à enlever par découpage les arêtes latérales, une lame de séparation servant à séparer les filets situés dans la zone de la queue de la colonne vertébrale en tranchant la chair laissée par les couteaux à ventre et à dos autour de la colonne vertébrale, un convoyeur sans fin servant au transport des poissons, la queue vers l'avant, ainsi qu'un certain nombre de supports de poissons disposés sur le convoyeur pour recevoir en toute sécurité les poissons dans leur cavité abdominale, **caractérisée en ce que** le dispositif servant à enlever par découpage les arêtes latérales est conçu selon l'une des revendications 1 à 12.
